# EUROPÄISCHE PATENTANMELDUNG

(11) **EP 0 590 494 A1**
(43) Veröffentlichungstag der Anmeldung: **06.04.1994**
(21) Anmeldenummer: 93115268.0
(22) Anmeldetag: 22.09.1993
(51) Int. Cl.: H04M 1/66, H04M 1/02

(54) **Mobiltelefon mit Verriegelungsfunktion**

(30) Priorität: 01.10.1992 DE 4233072
(71) Anmelder: SIEMENS AKTIENGESELLSCHAFT, D-80333 München (DE)
(72) Erfinder: Christal, Philip, D-85646 Anzing (DE)

(57) **Zusammenfassung**

Das Mobiltelefon ist mit einer Schaltvorrichtung mit mehreren Schalterstellungen für verschiedene Funktionen versehen, deren einen Schalterstellung eine Verriegelungsfunktion für das Tastenfeld beinhaltet.

## Beschreibung

Die Erfindung bezieht sich auf ein Mobiltelefon mit einem Tastenfeld mit Wähl- und Funktionstasten und einem Anzeigefeld sowie mit ggf. im Bedienteil integrierten Sende-/Empfangseinrichtungen (Handheld).

Ein übliches Problem bei Mobiltelefonen besteht darin, daß beim Transport beispielsweise in einer Tasche oder in der Jackentasche durch Bewegungen Tasten gedrückt werden können, die Anlaß für Fehlprogrammierungen oder auch ungewollte Telefonanrufe sind. Mit wachsender Anzahl von kompakten Mobiltelefonen und dem Bedürfnis, diese bei sich zu tragen sowie der großen Anzahl zu erwartender, unerfahrener Benutzer wird dieses Problem zunehmen.

Mögliche Lösungen bestehen darin, das Gerät vor dem Transport abzuschalten, wodurch jedoch das Mobiltelefon nicht in der Lage ist, Anrufe zu empfangen, sowie in der Anordnung der Tasten in Vertiefungen, das sie jedoch für den normalen Gebrauch unbequem macht. Eine effektive Lösung ergibt sich mit einer mechanischen Klappe zum Schutz der Tasten, die beim Telefonieren geöffnet werden muß. Dies hat jedoch Nachteile, ist nicht sehr bequem im Gebrauch und weniger geeignet für die Installation im Auto.

Der Erfindung liegt die Aufgabe zugrunde, eine einfache Lösung für das vorstehend genannte Problem zu schaffen.

Diese Aufgabe wird gemäß der Erfindung gelöst durch eine Schaltvorrichtung mit mehreren Schalterstellungen für die verschiedenen Funktionen, deren eine Schalterstellung eine Verriegelungsfunktion für das Tastenfeld beinhaltet.

Durch die erfindungsgemäßen Maßnahmen mit der abschließbaren Tastenfeldfunktion wird eine kostengünstige, einfach zu handhabende Lösung erreicht.

In vorteilhafter Ausgestaltung des Erfindungsgegenstandes ist vorgesehen, daß die Schaltvorrichtung aus einem Gleitschalter mit mehreren Schalterstellungen besteht, in denen das Gerät abschaltbar, nur auf Empfang und auf voll funktionsfähig schaltbar ist.

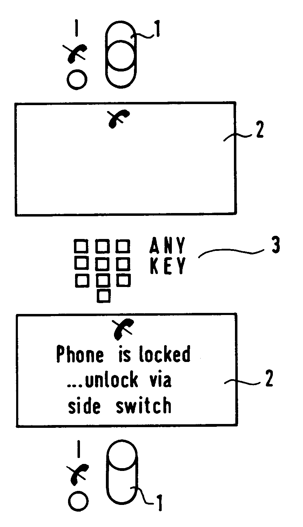

Nachstehend wird die Erfindung anhand eines in der Zeichnung dargestellten Ausführungsbeispieles näher erläutert. Die Figur zeigt einen Schiebeschalter 1, ein Anzeigefeld 2, das zur Darstellung von Informationen für die jeweilige Schalterstellung dient, sowie ein Tastenfeld 3. Der Schiebeschalter 1 hat drei Schalterstellungen. In der mittleren, im oberen Teil der Figur dargestellten Schalterstellung ist keine Taste operationsfähig und ein entsprechendes Abbild (durchgestrichenes Hörersymbol) erscheint als graphische Darstellung auf dem Anzeigefeld 2. Das Gerät ist hierbei angeschaltet, es können Anrufe empfangen werden. Wenn auf irgendeine Weise eine Taste gedrückt wird, erscheint auf dem Anzeigefeld der Hinweis "das Telefon ist verschlossen ... öffne es mittels des seitlichen Schalters." In der oberen Schalterstellung ist das Gerät abgeschaltet (vgl. in der Figur unten dargestellte Schalterstellung) und in der in der Figur nicht gezeigten unteren Schalterstellung des Schiebeschalters 3 ist das Gerät angeschaltet und voll funktionsfähig.

Der Schiebeschalter mit der Abschließfunktion für das Tastenfeld ist dabei in seiner Funktion kombiniert mit dem Ein-/Ausschalter, so daß in einem Schalter in vorteilhafter Weise mehrere Schalterfunktionen zusammengefaßt sind. Bei den einzelnen Schalterstellungen erscheinen am Display zugleich Informationen über den Funktionszustand des Mobiltelefons und Anweisungen zur Hilfestellung für den Benutzer, das Mobiltelefon durch entsprechende Schalterbetätigung in der gewünschten Weise zu handhaben.

## Patentansprüche

1. Mobiltelefon mit einem Tastenfeld mit Wähl- und Funktionstasten und einem Anzeigefeld sowie mit ggf. im Bedienteil integrierten Sende-/Empfangseinrichtungen (Handheld),
**gekennzeichnet** durch eine Schaltvorrichtung mit mehreren Schalterstellungen für verschiedene Funktionen, deren eine Schalterstellung eine Verriegelungsfunktion für das Tastenfeld beinhaltet.

2. Mobiltelefon nach Anspruch 1,
**dadurch gekennzeichnet,**
daß die Schaltvorrichtung aus einem Gleitschalter mit mehreren Schalterstellungen besteht, in denen das Gerät abschaltbar, nur auf Empfang und auf voll funktionsfähig schaltbar ist.
